Europäisches Patentamt

European Patent Office

Office européen des brevets

(11) Publication number: **0 056 517**
**B1**

# EUROPEAN PATENT SPECIFICATION

(45) Date of publication of patent specification: **08.03.89**

(21) Application number: **81305350.1**

(22) Date of filing: **11.11.81**

(60) Divisional application **86201146 filed on 30.06.86.**

(51) Int. Cl.⁴: **G 01 S 1/08,** G 01 S 13/06,
G 01 S 15/06, G 01 S 17/06

(54) Phase lens for use in identifying the path of signals emitted or received by a transducer.

(30) Priority: **15.01.81 US 225410**

(43) Date of publication of application:
**28.07.82 Bulletin 82/30**

(45) Publication of the grant of the patent:
**08.03.89 Bulletin 89/10**

(84) Designated Contracting States:
**BE DE FR GB NL**

(56) References cited:
**DE-A-2 651 350**
**DE-B-2 839 881**
**FR-A-2 433 760**
**GB-A-1 554 751**
**US-A-4 103 302**
**US-A-4 114 153**
**US-A-4 315 263**

(73) Proprietor: **Neidell, Norman S.**
**908 Town and Country Boulevard**
**Houston Texas 77024 (US)**

(72) Inventor: **Neidell, Norman S.**
**908 Town and Country Boulevard**
**Houston Texas 77024 (US)**

(74) Representative: **Boon, Graham Anthony et al**
**Elkington and Fife Beacon House 113 Kingsway**
**London, WC2B 6PP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a phase lens for use in identifying the path of signals emitted or received by a transducer.

According to Karwarth in the *Journal of the Institute of Navigation*, Vol. 24, No. 1, pp. 105—120, January, 1, 1971, the basic objective of area navigation is to position in real time with appropriate accuracy one or more mobile platforms with reference to some known coordinate system. The number of coordinates needed depends upon whether the course of the mobile platform can be charted on a known surface or must be described in three-dimensional space as in the respective cases of a ship at sea and an aircraft. The ability to chart a course based on past, present and future desired positions is a principal element in distinguishing an area navigation system from nagivation using point-to-point or "homing" approaches such as VOR/DME (VHF Omnidirectional Range/Distance Measuring Equipment).

Positions are established in all cases by signal transmission between the mobile units and at least one transmitter of known location. The transmissions can be electromagnetic (including optical) or acoustic in any medium including air. Two basic methods are normally used to obtain positions:

Positions may be determined from a sufficient number of range measurements to known reference locations by using what is commonly known as "range-range" systems, or positions may be determined from a sufficient number of range differences to known reference locations, by using what are commonly known as "hyperbolic" systems. In each case a sufficient number is at least equal to the number of coordinate values needed.

Direct ranging involves calculation of intersections of the circles or spheres of uniform range from each reference location to the mobile unit. By contrast, the locus of equal range difference from the mobile unit to a pair of reference locations are hyperbolae or hyperboloids of revolution. Again, positions are calculated by intersection of curves or surfaces, but in this case related to the hyperbolae, hence the name hyperbolic systems.

An exemplary task of area navigation might be the positioning of a ship at near shore distances. In range-range operation only two shore stations are needed while a hyperbolic system requires three. Three shore stations admit calculation of two independent range differences. As a general rule, hyperbolic systems offset a disadvantage in requiring one or more known reference locations than the simpler range system by not requiring either a time standard or an active transmitter on the ship.

As for the transmitted signals, a variety of differing modes of operation are possible. Ranges can be determined from signal transmission time between the mobile unit and a reference location if the signal initiation time is known, a time standard is available, and a signal propagation velocity is also known. The simplest means for establishing known initiation times is to transmit signals only in response to some interrogation. Alternatively, if transmissions are synchronized to occur at regular time intervals, time differences are readily determined, with no interrogation step needed, using only a local clock and a propagation velocity.

Again, signal transmissions themselves can consist of continuous waveforms (typically sinusoids), intervals of continuous signal transmissions, or sequences of pulses. The choice of transmitted signal reflects consideration of the information desired, mode of operation (range/range versus hyperbolic), noise effects, and the extent of Doppler distortions among other factors.

Continuous waveforms are the most robust signals in the presence of noise backgrounds since correlation-type receivers may take advantage of the extreme signal duration. Such signals have no resolution in time and are used principally with hyperbolic systems to establish time-differences by making phase comparisons with reference signals. Where the transmitter-receiver relative velocity is not insignificant in proportion to the signal propagation velocity, Doppler effects shift the frequencies of continuous waveforms. Frequency shifts may be viewed as errors since they distort subsequent correlation steps and thus degrade phase comparision; however, if such shifts are measured, they do relate to velocity information should this be desired.

Use of continuous signals over intervals provides time resolution as well as opportunities for correlation detection, but over shorter data windows. Again, any Doppler effects may be viewed either as constituting an error in range determination or if measured, velocity information. The tolerance of such signals to noise effects is of course diminished in direct relation to their shortened duration.

In the limit, as duration is shortened, pulsed signals must be considered which when taken individually offer no opportunity to measure Doppler effects. Hence significant transmitter-receiver relative velocities will be noted as range errors for such systems. These signals are also most affected by the presence of noise, but afford the greatest resolution in making a direct time measurement.

It follows that the alternative methods of operation that exist constitute attempts at optimizing a number of trade-offs which interact with some complexity. The hardware requirement, operations costs, efficiencies and effectiveness in terms of achievable accuracy are all essential ingredients that play roles in the optimization.

EP—A—0075627 described and claims the use of a particular class of signals, of which Klauder and Gabor signals are two examples, in a navigation system. Such signals and the processing thereof are also described in the text of the present application as first published as EP—A—-0056517. It is preferred that such signals should be used with the phase lenses which are claimed in the present application, and attention is directed to EP—A—0075627 and EP—A—0056517 for further details.

The concept of a phase lens is disclosed in relation to an echo location system in US—A—4114153 and a particular design of phase lens is disclosed in EP—A—0075627. It is an object of the present invention to provide particular novel forms of phase lens. Such lenses can be used in a navigation system.

According to a first aspect of the invention there is provided a phase lens (L) surrounding a transducer for use in identifying the path of signals emitted or received by the transducer over some range of interest of a polar coordinate angle ($\phi$), comprising a body of dispersive material with the transducer located at the origin of the polar coordinate, said body of dispersive material having a radial dimension described by a constant and a term proportional to the polar coordinate angle ($\phi$) over such range of interest which imparts to a constant portion of the phase parameter of signals passing through said body a characteristic identifying the path of the signal with respect to the transducer over the range of interest of the polar coordinate angle ($\phi$).

According to a second aspect of the invention there is provided a phase lens (L-1, L-2) in combination with a transducer having a known reference point, for use in a medium to identify the path of signals emitted or received by the transducer, the phase lens comprising a reflector said reflector being of a material having a higher velocity of propagation for the signals emitted or received by the transducer than the velocity of the signals in the medium, said reflector being located at a position with respect to the known reference point on the transducer so that only signals which are reflected from said reflector at an angle greater than that critical angle for said reflector in the medium pass to or from the known reference point in the transducer, the phase lens further including shield means for substantially diverting all signals other than those which pass to or from the known reference point in the transducer and which are reflected by said reflector at an angle greater than the critical angle for said reflector in the medium.

The present invention thus involves, in its first aspect, the application of dispersion to signal phase. The phenomenon of dispersion is well known in optics. By way of an appropriate background regarding this principle in order to understand its application to the present invention, an appropriate definition of dispersion, a presentation of the distinguishing characteristics of normal and anomalous dispersion, and a description of various embodiments of dispersion may be found in Sommerfield, *Mechanics of Deformable Bodies*, Academic Press, New York 396 p, 1950 (see in particular pp. 172—206, 2nd printing 1956), and Longhurst, *Geometrical and Physical Optics*,

Longman, 592 p, 2nd Edition, 1967 (see in particular p. 452 and Fig. 20-4).

It is necessary to distinguish also the phase-angle rotation undergone by a signal in travelling through a dispersive medium or in post-critical angle reflection from a mere time delay. If the angular frequencies contained within the spectrum of a signal having bandwidth range from a value $\omega_1$, to a greater value $\omega_2$, the phase spectrum of the signal over that range will be some function $f(\omega)$,

$$\omega_1 \leq |\omega| \leq \omega_2.$$

After travelling through a dispersive medium the change in phase of the signal, which characterizes the degree of dispersion, can be described in first approximation by

$$\Delta f(\omega) = \theta_1 + \theta_2 \omega$$

where $\theta_1$ and $\theta_2$ are constants which depend only on the medium and the distance travelled within the medium.

The value of the contant $\theta_2$ describes the delay of the signal, that is, it is the increment of time that the signal has undergone in travelling through the medium or simply the signal travel time. The phase angle rotation is given by the value of the constant $\theta_1$. Because phase is an angular measure, two signals of like amplitude spectra whose phase spectra differ by an integral multiple of $2\pi$ are identical and hence indistinguishable. It is therefore customary to replace any value of $\theta_1$ that is equal to or greater than $2\pi$ by the residue of $\theta_1$ modulo $2\pi$ or in common terminology by the remainder after dividing $\theta_1$ by $2\pi$. Values of $\theta_1$ modulo $2\pi$ other than 0 and $\pi$ correspond to changes in the signal shape.

The phase lenses of the present invention are described herein in connection with their use in navigation systems for mobile platforms that ascertain phase encoded angular coordinate information in propagated signals.

In the accompanying drawings:

Fig. 1 shows schematically a navigation system having a single transmitter and receiver;

Fig. 2 shows a section view of an embodiment of a phase lens according to the invention which encodes directional information by transmission of acoustic signals through a dispersive material whose thickness varies with the direction which is to be encoded;

Fig. 3 shows a further embodiment of a phase lens according to the invention for dispersive encoding of directional information using post-critical angle reflection of acoustic signals;

Fig. 4 shows another embodiment of a phase lens according to the invention for dispersive encoding of directional information using post-critical angle reflection of electromagnetic signals;

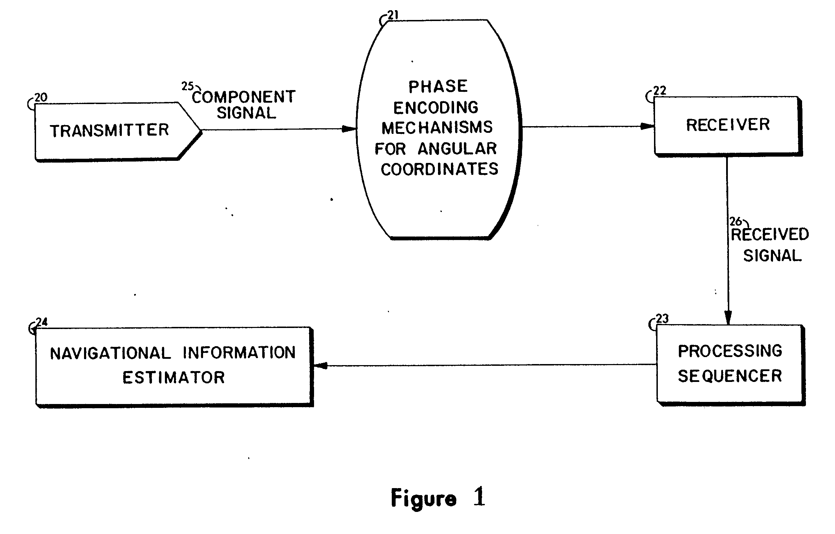

Figure 1 shows a navigation system in which the phase lenses of the invention may be employed. The system comprises a single transmitter 20 and receiver 22. The transmitter 20 produces at least one component signal 25. A component signal is a train of member signals which is always separable and distinguishable from other component signals by some preselected combination of frequency content, polarization character and member signal pattern. In cases such as for sonar signals where the polarization character is alike for all signals, the polarization character drops out as a possible distinguishing feature. A discussion on polarization character or state is presented by A. S. Marathay in Optical Engineering, Vol. 15, No. 4, p. SR 80—81, July—August, 1976.

For the navigation system of Fig. 1, it is required that a transmitted component signal 25 be received directly, but that somewhere along the propagation path a mechanism interacting with the signal phase be encountered, viz a phase lens. Element 21 is a phase lens. Component signal 25 which propagates with known velocity encounters phase lens 21 and is subsequently received by receiver 22. The received component signal 26 is forwarded to the processing sequencer 23 and processing outputs are sent on to the navigational information estimator 24.

The role of the phase lens 21 is to encode in each member signal information about one or more angular coordinates as a phase distinction. Also, the phase distinction for each angular coordinate must be unambiguously related to that coordinate. Further, the phase distinction over the applicable frequency band for any given value of the angular coordinate must be representable in good approximation by;

$$G(\omega)=\theta_0+\theta_1\omega \qquad (3)$$

where,

$\theta_0$ is constant phase,

$\theta_1$ is a complementary constant multiplying the angular frequency $\omega$.

$\theta_0$, $\theta_1$ are functions of the angular coordinate thus making $G(\omega)$ a function of the angular coordinate. The code for the angular coordinate is contained in the explicit relation between the coordinate and $G(\omega)$.

The amplitude spectra of the underlying base signals must be substantially maintained even after the action of the phase encoding mechanism 21. Equation (3) will be recognized as comprising the first two terms of a Taylor series expansion. Hence the character of this approximation is based upon development of the received member signal phase spectrum as a Taylor series with truncation of the series after the second term. For the $i^{th}$ member signal of a component signal, the following notation will be used:

$$\theta_{i0}+\theta_{i1}\omega$$

to approximate the measured phase.

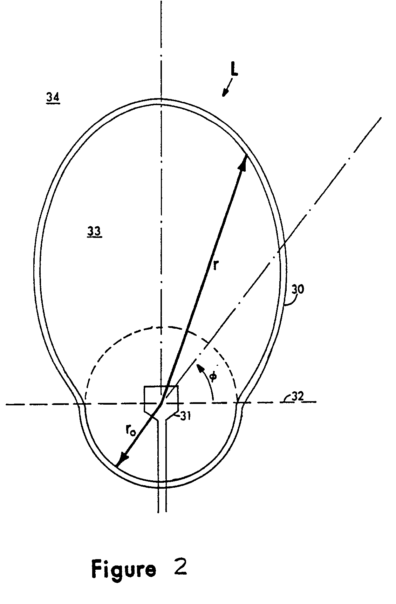

A presently preferred embodiment of a phase lens L for phase encoding of angular coordinate information according to the present invention employs the dispersive properties of a suitable material. In this embodiment (Fig. 2) an acoustic transducer 31 is placed at the enter of a spherical volume of radius 3.5 cm in a shell 30. The shell 30 is formed in part by a lower portion of this spherical volume which also acts as a reference surface for the other portions of the lens L. Fig. 2 shows a section view of a rigid shell 30 filled with oil 33 which surrounds the transducer 31, the transducer 31 being rigidly positioned with respect to shell 30. A suitable acoustically transparent material for fabricating the shell 30 is an epoxy resin, as for example GEC-500 Nema Grade G-10 Glass epoxy which is manufactured by the Synthane-Taylor Corp. in LaVerne, California.

The entire apparatus L is immersed in the transmission medium 34, for example water. Alternatively the portion of the lens L for which $\phi$, the elevation angle, is negative with respect to a horizontal plane 32 may be outside the medium, for example below the bottom of the body of water 34. It is also to be understood that lens L may be directed downward below a free surface instead of upward as shown.

If we take the radius of portion of shell 30 below plane 32 or $r_0=3.5$ cm, then the configuration of shell 30 is specified by the mathematical relations:

$$r=r_0 \qquad\qquad o\geqq\phi\geqq=\tfrac{1}{2}$$

$$r=r_0+c\phi \qquad\qquad o<\phi\leq\pi/2$$

$$r=r_0+c(\pi-\phi) \qquad\qquad \pi/2\leq\phi\leq\pi$$

where $\phi$ is the elvation angle measured counterclockwise and upward from the horizontal plane 32 in the plane of the section depicted in Fig. 2 and $c$ is a constant. An appropriate value for c if $\phi$ is measured in radians may be taken equal to 60/$\pi$. Hence for $\phi$ values negative and less than $\pi$ radians, the outgoing signal will suffer some small but constant dispersive phase distortion independent of $\phi$. When $\phi$ is positive however, the degree of dispersion and so the dispersive phase effect will depend on $\phi$. All horizontal sections of shell 30 parallel to the horizontal plane 32 will be circular thus eliminating any dependence of the dispersive phase distortion on an azimuth angle measured in the horizontal plane.

Phase encoding a distinction in phase with lens L in accordance with angle angular coordinate or equivalently a direction in the presently preferred embodiment as illustrated by an acoustic system can be practiced by emitting a signal of Klauder form mentioned above in seawater. For engineering considerations seawater velocity will be accepted as being 1500 m/sec. (Press, "Seismic Velocities," Chapt. 9, *Handbook of Physical Constants* Revised Edition, Geol. Soc. of America, Memoir 97, 1966) and its Q value describing dispersion as 62,800 (Bradley and Fort, "Internal Friction in Rocks" Chapt. 8, *Handbook of Physical Constants—Revised Edition*, Geol. Soc. of America, Memoir 97, 1966), Q being related to

200 π divided by the percent energy—loss per cycle. The selected acoustic velocity is dependent on salinity and temperature. Similarly, while the Q value specified above has been measured at 150 kz, the large magnitude suggests that at substantially lower frequencies seawater will remain essentially non-dispersive.

An Interocean Systems, Inc., Model T111 transducer is representative of a number of commonly available devices that may be employed as transducer 31 to produce a signal as required in the exemplary frequency band from 2000—8000 Hz. The transducer 31 may be driven by a signal generator whose output is appropriately impedance-matched to the transducer character. It is to be noted that the autocorrelation of a swept-frequency or "chirp" signal approximates the Klauder waveform $k_1(t)$ and hence may be usefully employed for driving the transducer.

A Gould Clevite CH-1 omni-directional hydrophone may, for example, be employed for signal detection when supplied with standard preamplifiers and fittings. Many of the hydrophones customarily used in seismic exploration may also be used.

A calibration step may be employed to establish the encoding properties of the lens. Calibration uses a hydrophone at known distances from the center of transducer 31 over a variety of positive φ values to receive signals. The received signals may then be processed in the manner to be described herein and also in the above U.S. patent. This processing establishes both the time-delay of the dispersion, if any exists, and values of constant phase rotations independent of frequency. By such means the phase modulation properties of the lens L may be characterized by an expression of the form $\theta_1+\theta_2\omega$ as described hereinabove.

It is important to note two points from the calibration step. First, if the constant phase rotation over frequency does not vary sufficiently in magnitude over the range $o<\phi\leq\pi/2$, or else varies so as to impart some ambiguity in relating φ to such constant quantity, it may be necessary to redesign the lens in one or more manners to correct the situation. For example, the constant c governing the lens dimension may be decreased or increased according to the nature of the redesign. Also, if the rate or phase change as a function of φ is insufficient to produce the desired angular resolution, an increased phase change rate may be obtained by use of a more highly dispersive oil or by increasing the value of c or both.

If the phase change over the ninety degrees range of φ equals or exceeds one hundred eighty degrees an ambiguity is produced. The proper course of action is to reduce the value of constant c or use less dispersive oil or both. Further, any linear phase shift or linear term in ω as embodied by the constant $\theta_2$ must be removed in the form of a correction to the arrival time of the signals.

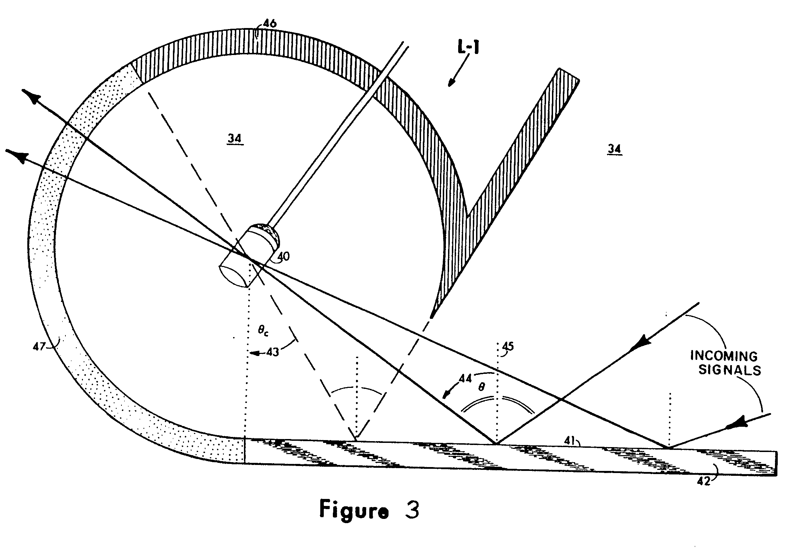

An alternative phase lens L-1 according to the invention is illustrated in Fig. 3 wherein a hydrophone 40 of the type set forth previously is positioned such that it detects only post-critical angle reflections from a surface 41 of a rolled lead reflector 42 over a 40° planar sector. In this illustrative example the velocity of sound in water is taken to be 1500 m/sec while the velocity of sound in lead is taken to be 1960 m/sec (Press, "Seismic Velocities", Chapt. 9, *Handbook of Physical Constants*—Revised Edition, Geol. Soc. of America, Memoir 97, 1966 and *Handbook of Chemistry and Physics*, 51st Edition P E—41, Chemical Rubber Company, 1970—71). Accordingly, the critical angle is slightly less than 50°.

The physical principles underlying the phase behavior of signals reflected beyond the critical angle are described for a fluid-fluid interface by Ewing, Jardetsky and Press, *Elastic Waves in Layered Media*, McGraw Hill, 380 p. 1957 (see in particular 3-2) and Arons and Yennie, "Phase Distortion of Acoustic Pulses Obliquely Reflected from a Medium of Higher Sound Velocity", JASA, Vol. 22, pp. 231—237, 1950. In going from the critical angle $\theta_c$ to 90°, as measured by a reflection angle 44 having a value θ from the normal 45 to the reflecting surface 41, the constant phase increment, which is independent of frequency, varies from 0° to 180°. For materials which support shear waves the post-critical angle reflective behavior can be rather complex, however the behavior at the interface between water 34 and rolled lead 42 is essentially like a fluid-fluid boundary. A computation as described by Cerveny and Revindra in *Theory of Seismic Head Waves*, University of Toronto Press, 1971 (see p. 63—64) makes the relationship evident.

The phase lens depicted in Fig. 3 is designed for use in a single plane and shield material 46 is a high-velocity, high-density reflective material such as steel whose purpose is to shield hydrophone 40 from signals outside the sector of interest. By the same token an acoustically transparent material 47, which may be an epoxy resin of the type in the apparatus of Fig. 2, completes the structure and allows signals to pass on after detection without causing interfering echos. The whole apparatus of Fig. 3 may be contained in a cylinder 0.5 m in diameter and 0.1 m in height or thickness.

Calibration of the lens apparatus L-1 is done in substantially the same manner as that for the apparatus of Fig. 2. Directional or angular coordinate information is encoded onto an incoming signal by the lens L-1 prior to detection by the hydrophone 40. The constant phase increment to be calculated in the processing sequence gives the directional information. It is to be noted particularly that the phase incrementation properties in this case are exactly described by a constant term $\theta_1$ independent of frequency and a time delay or term linear in frequency representing only the reflection process prior to detection. All higher order terms of the Taylor expansion are in fact zero.

The phase lens of Fig. 2 described phase encoding in outgoing signals whereas the embodiment of Fig. 3 illustrated encoding in the received signals. In both cases the encoding enabled the apparatus to make distinctions among signals based upon direction. It should be apparent to those skilled in the signalling arts that the apparatus of Fig. 2 can be used with a receiver rather than a transmitter, while the apparatus of Fig. 3 will function with a transmitter instead of a receiver. Such interchanges of transducers will not alter the operation of the principles of the navigation system in distinguishing directional coordinates.

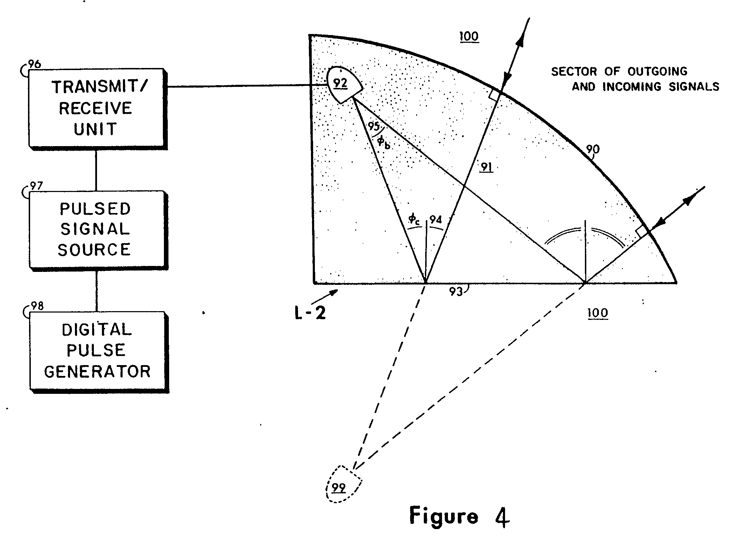

An alternative embodiment of the phase lens is shown as lens L-2 in Fig. 4. In principle the lens apparatus L-2 is rather similar to the phase lens of Fig. 3 except that now the encoding is accomplished in the transmitted signal rather than in the received signal. The medium is air or space, and the signals are electromagnetic rather than acoustic. Referring to Fig. 4, a solid structure 90 constructed of a paraffin or paraffin-like material 91, for example Stycase TPM 4 Cast Resin (available from Emerson and Cuming, Inc. of Canton, Mass.), surrounds a transmitter 92. The lower paraffin material boundary is precisely flat so as to constitute a specular reflecting surface 93. Note that a boundary between air 100 and a dielectric material is needed rather than between air and some conducting material so that a critical angle may be defined. As a practical matter, a hard shell (not shown) of material such as Ecco Foam P. P. Series closed cell plastic sheeting (also available from Emerson and Cuming, Inc. of Canton, Mass.) can surround the paraffin material 91 for protection. The shell thickness should be thin compared to the wavelengths of the electromagnetic radiation.

The relative dielectric constants for air and a typical paraffin material are taken respectively as 1.0 and 2.1 according to Von Hippel, *Dielectric Materials and Applications*, M. I. T. Press, p. 438, 1954. Hence the critical angle 94 denoted by $\phi_c$ in this case is about 28.4°. A circularly polarized spiral antenna (as for example the Transco type RHAW, available from Transco Products, Inc. 4241 N. Glencoe Avenue, Venice, California 90291) may, for example, be the transmitter 92 and for some applications may also serve as the receiver as well. This Antenna operates in the frequency range from 0.5 to 18 Ghz and has a beam width 95 denoted by $\phi_b$, as defined by the 3 db level, of 25°.

A transmit/receive unit 96 is connected to transmitter 92 to allow the apparatus to be used both as a transmitter and a receiver. A suitable unit 96 may be purchased from Raytheon, Co. Microwave and Power Tube Division, Fondry Avenue, Waltham, Mass. 02154. A pulsed signal source 97, such as a Model PH 40K modified for 2.5—10 Ghz available from EPSCO Microwave, Inc., 411 Providence Highway, Westwood, Mass. 02090, is used to provide unit 96 and transmitter 92 with pulses from a digital pulse generator 98, for example a Motorola 6800 Microprocessor (from Motorola, Inc., 8201 E. McDowell Rd., P.O. Box 1417, Scottsdale, Arizona 85252).

Using the microprocessor, a Klauder waveform $k_1(t)$ having a frequency band between 2.5 and 10 Ghz may be produced thus giving a mode of operation quite analogous to the acoustic case previously described.

The shape of the curved surface of the paraffin material 90, where signals exit or enter, should be a portion of a sphere that has its center at the virtual image position 99 of transmitter 92. Since all signals would then cross the paraffin-air boundary at normal incidence, no bending effects caused by Snell's law would be introduced. It is also important that far field signals from the transmitter 92 be produced for reflection by the specular reflecting surface 93. This can be assured by placing the transmitter at least 15 cm measured normally from the specular reflecting surface 93. For such case the radius of the sphere describing the curved paraffin surface measures about 35 cm.

Phase encoding as a function of direction takes place over the entire 25° beam-width. The undistorted Klauder signal $k_1(t)$ is reflected at the critical angle $\phi_c$, but all other bearing angles have a characteristic constant phase shift. In the case where the apparatus is used both to transmit and receive signals, all phase shifts are doubled since two postcritical angle reflections are applied. For this case it is also important to note that the signals reflected or scattered back to the transmitter from the paraffin-air interfaces arrive well in advance of signals from the much more distant objects that are being tracked and so may be deleted, if desired, by appropriate time gating.

Finally, there may remain some ambiguity about the signal trajectory which would be dependent on an elevation angle measured in a plane parallel to the specular reflecting surface 93. Similar ambiguity was inherent also in the apparatus of Fig. 3 and is resolved using other information components or using techniques which encode more than one angular coordinate as we have described.

**Claims**

1. A phase lens (L) surrounding a transducer (31) for use in identifying the path of signals emitted or received by the transducer (31) over some range of interest of a polar coordinate angle ($\phi$), comprising a body of dispersive material (33) with the transducer (31) located at the origin of the polar coordinate, said body of dispersive material (33) having a radial dimension described by a constant and a term proportional to the polar coordinate angle ($\phi$) over such range of interest which imparts to a constant portion of the phase parameter of signals passing through said body a characteristic identifying the path of the signal with respect to the transducer (31) over the range of interest of the polar coordinate angle ($\phi$).

2. A phase lens (L-1, L-2) in combination with a transducer (40, 92) having a known reference point, for use in a medium to identify the path of signals emitted or received by the transducer, the phase lens comprising a reflector (42, 93) said reflector being of a material having a higher velocity of propagation for the signals emitted or received by the transducer (40, 92) than the velocity of the signals in the medium, said reflector (42, 93) being located at a position with respect to the known reference point on the transducer (40, 92) so that only signals which are reflected from said reflector at an angle greater than the critical angle for said reflector in the medium pass to or from the known reference point in the transducer, the phase lens further including shield means (46) for substantially diverting all signals other than those which pass to or from the known reference point in the transducer (40) and which are reflected by said reflector (42) at an angle greater than the critical angle for said reflector in the medium.

**Patentansprüche**

1. Phasenlinse (L), die einen Wandler (31) umgibt, zur Verwendung bei der Identifizierung des Weges von Signalen, die von dem Wandler (31) abgegeben oder empfangen wurden, über einen interessierenden Bereich eines Polarkoordinatenwinkels (θ) umgibt, mit einem Körper aus streuendem Material (33), wobei der Wandler (31) sich im Ursprung der Polarkoordinate befindet, bei welcher der Körper aus streuendem Material (33) eine radiale Dimensionierung hat, welche durch eine Konstante und einen Term beschrieben ist, der proportional zu dem Polarkoordinatenwinkel (θ) über einen solchen interessierenden Bereich ist, welcher einem konstanten Bereich des Phasenparameters der durch den Körper hindurchgehenden Signale eine Eigenschaft verleiht, die den Weg des Signales gegenüber dem Wandler (31) über den interessierenden Bereich des Polarkoordinatenwinkels (θ) identifiziert.

2. Phasenlinse (L-1, L-2) in Kombination mit einem Wandler (40, 92), der einen bekannten Bezugspu nkt aufweist, zur Verwendung in einem Medium zur Identifizierung des Weges von Signalen, die von dem Wandler abgegeben oder empfangen werden, wobei die Phasenlinse einen Reflektor (42, 93) aufweist, welcher aus einem Material besteht, das eine höhere Fortpflanzungsgeschwindigkeit für von dem Wandler (40, 92) abgegebene oder empfangene Signale hat gegenüber der Geschwindigkeit von Signalen in dem Medium, bei welcher der Reflektor (42, 93) an einer Position gegenüber dem bekannten Bezugspunkt auf dem Wandler (40, 92) angeordnet ist, so daß nur Signale, die von dem Reflektor unter einem Winkel, der größer ist als der kritische Winkel für den Reflektor, in dem Medium zu oder von dem Bezugspunkt des Wandlers gelangen, wobei die Phasenlinse weiterhin eine Abschirmung (46) aufweist, um im wesentlichen alle Signale abzuleiten mit Ausnahme solcher, die zu oder von dem bekannten Bezugspunkt in dem Wandler (40) passieren und die von dem Reflektor (42) unter einem Winkel reflektiert werden, der größer ist als der kritische Winkel für den Reflektor in dem Medium.

**Revendications**

1. Une lentille de phase (L) entourant un transducteur (31), destinée à identifier le chemin de signaux émis ou reçus par le transducteur (31) sur un certain domaine utile d'une coordonnée polaire d'angle (φ), comportant une masse de matériau dispersant (33) avec le transducteur situé à l'origine de la coordonnée polaire, cette masse de matériau dispersant (33) ayant une dimension radiale décrite par une constante et un terme proportionnel à la coordonnée polaire d'angle (φ) dans ledit domaine utile, donnant au paramètre de phase des signaux traversant cette masse une caractéristique identifiant le chemin du signal reçu par rapport au transducteur (31) dans ledit domaine utile.

2. La combinaison d'une lentille de phase (L-1, L-2) et d'un transducteur (40, 92) avec un point de référence connu, destinée, dans un certain milieu, à identifier le chemin de signaux émis ou reçus par le transducteur, la lentille de phase comprenant un réflecteur (42, 93), ce réflecteur étant en un matériau ayant une vitesse de propagation des signaux émis ou reçus par le transducteur (40, 92) plus élevée que la vitesse des signaux dans le milieu, le réflecteur (42, 93) étant placé, par rapport au point de référence connu sur le transducteur (40, 92), en un point tel que ne passent, en direction ou en provenance du point de référence connu dans le transducteur, que ceux des signaux qui sont réfléchis par le réflecteur avec un angle supérieur à l'angle critique de ce réflecteur dans le milieu, la lentille de phase comportant en outre des moyens formant écran (46) pour essentiellement détourner tous les signaux autres que ceux passant en direction ou en provenance du point de référence connu dans le transducteur (40) et qui sont réfléchis par le réflecteur (42) avec un angle supérieur à l'angle critique de ce réflecteur dans le milieu.

Figure 1

Figure 2

Figure 3

L-1

INCOMING SIGNALS

EP 0 056 517 B1

Figure 4